# EUROPEAN PATENT APPLICATION

(11) **EP 3 848 860 A1**
(43) Date of publication of application: **14.07.2021**
(21) Application number: 19858129.0
(22) Date of filing: 29.08.2019
(51) Int. Cl.: G06N 99/00, G01J 4/00, G01N 21/88

(54) **QUBIT DETECTION SYSTEM AND DETECTION METHOD**

(30) Priority: 05.09.2018 CN 201811029930
(71) Applicant: ALIBABA GROUP HOLDING LIMITED, George Town, Grand Cayman (KY)
(72) Inventor: XU, Hua, Hangzhou, Zhejiang 311121 (CN)
(74) Representative: Finnegan Europe LLP
(86) International application number: PCT/CN2019/103246
(87) International publication number: WO 2020/048375

(57) **Abstract**

The present invention relates to a qubit detection system and method. The detection system includes a test module and a prediction module. The test module includes an imaging device configured to image qubits. The prediction module is in a communication connection with the module, and includes a machine learning model configured to output prediction information based on at least an obtained image. The detection method includes: imaging qubits by an imaging device; inputting an obtained image to a trained machine learning model; and outputting, by the machine learning model, prediction information based on at least the obtained image.

## Description

This application claims priority to Chinese Patent Application No. 201811029930.4, filed on September 5, 2018 and entitled "QUBIT DETECTION SYSTEM AND DETECTION METHOD," which is incorporated herein by reference in its entirety.

### Technical Field

The present disclosure relates to the field of detection, and in particular, to a qubit detection system and detection method.

### Background

Quantum computing and quantum information is a cross-discipline for realizing computing and information processing tasks based on principles of quantum mechanics, and is closely related to quantum physics, computer science, informatics, and other disciplines. It has been developed rapidly in the last two decades. Quantum computer-based quantum algorithms in factorization, unstructured search, and other scenarios have shown the performance far beyond that of existing algorithms based on classical computers, and this direction is thus expected to exceed the existing computing power.

One of the basic characteristics of a quantum computer is that the information unit it uses is not bit, but Qubit. Qubits may be particles like electrons, or other quasi-particles that are in elementary excitation. For electrons, spin-up represents 1, and spin-down represents 0. A quantum state with both spin-up and spin-down is called a superposition state. A small number of particles in a superposition state can carry a large amount of information. The superposition state of only 100 particles can represent numbers from 1 to 2100. A quantum computer can use laser pulses to hit particles, or use such methods to manipulate qubits.

At present, main implementation methods of qubits include: superconducting Josephson junctions, ion traps, magnetic resonance, topological quantum, and the like. Researchers generally use electronic equipment to detect qubits obtained from preparation, for determining whether the qubits obtained from preparation have defects, and obtaining preliminary property parameters thereof. This type of methods is time-consuming and labor-intensive. Especially for qubits based on superconducting Josephson junctions, the detection needs to be performed in a low temperature environment (liquid helium temperature), and the cost of obtaining a low temperature environment is very high. Therefore, the cost of detection in a low temperature environment is also very high. On the other hand, the detection of qubits in the prior art can only be performed after the preparation of the qubits is completed. In other words, if a defect occurs in the preparation of the qubits, it cannot be detected by the detection methods based on the prior art. Based on the above, the detection means for qubits in the prior art are not only expensive, but also difficult to meet future needs of the preparation of qubits after large-scale industrialization.

Based on the above, a qubit detection device and method are required to solve the above technical problems.

### Summary of the Invention

According to an embodiment in one aspect of the present disclosure, a qubit detection method is provided, including: imaging qubits by an imaging device; inputting an obtained image to a machine learning model; and outputting, by the machine learning model, prediction information based on at least the obtained image.

Preferably, the qubits are detected by a detection device to obtain detection data; the detection data is input to the machine learning model; and the machine learning model outputs prediction information based on test data and the obtained image.

Preferably, design information of the qubits is acquired; the design information of the qubits is input to the machine learning model; and the machine learning model outputs prediction information based on the design information, the test data, and the obtained image.

Preferably, the imaging device includes a scanning electron microscope (SEM) and a scanning tunneling microscope (STM).

Preferably, the imaging device performs imaging in a qubit preparation process, and the preparation process includes a plurality of steps.

Preferably, the imaging device performs imaging after the preparation of qubits is completed

Preferably, the prediction information includes quantitative information and qualitative information.

Preferably, the quantitative information includes at least one of the following: working frequency, coherence time, and coupling strength.

Preferably, the qualitative information includes classification of qubits.

According to some embodiments in another aspect of the present invention, a qubit detection system is provided, including a test module, wherein the test module includes an imaging device configured to image qubits; and a prediction module, wherein the prediction module is in a communication connection with the test module and includes a machine learning model configured to output prediction information based on at least an obtained image.

Preferably, the test module further includes a detection device configured to detect qubits so as to obtain detection data.

Preferably, the imaging device includes a scanning electron microscope (SEM) and a scanning tunneling microscope (STM).

Preferably, the machine learning model includes a convolutional neural network (CNN), a deep neural network (DNN), and a recurrent neural network (RNN).

Preferably, the qubit detection system further includes an interaction module and a monitoring module, wherein the monitoring module is in a communication connection with the prediction module, and the interaction module is in a communication connection with the prediction module and the monitoring module.

Preferably, the qubit detection system further includes a test control module, wherein the test control module is located between and in a communication connection with the test module and the prediction module, and the test control module includes: an imaging data generation module, an imaging data reading module, a qubit test generation module, and a qubit test data reading module.

Preferably, the prediction module includes a qubit defect determining and property prediction module.

According to some embodiments of another aspect of the present invention, a qubit detection device is provided, including a processor and a non-transitory storage medium, wherein the non-transitory storage medium stores an instruction set, and when executed by a processor, the instruction set implements: a device configured to enable an imaging device to image qubits; a device configured to input an obtained image to a machine learning model; and a device configured to enable the machine learning model to output prediction information based on at least the obtained image.

### Brief Description of the Drawings

The accompanying drawings described here are used to provide a further understanding of the present disclosure and constitute a part of the present disclosure. The exemplary embodiments of the present disclosure and descriptions thereof are used to explain the present disclosure, and do not constitute an improper limitation to the present disclosure. In the accompanying drawings:
FIG. 1 is a framework diagram of a qubit detection system based on some embodiments of the present invention; and
FIG. 2 is a flowchart of a qubit detection method based on some embodiments of the present invention,
wherein: 100: qubit detection system, 200: qubit preparation process, 2. test module; 21: imaging device; 22: detection device; 3. test control module; 31. imaging data generation module; 32. imaging data reading module; 33. qubit test generation module; 34. qubit test data reading module; 4. prediction module; 41. qubit defect determining and property prediction module; 42. machine learning model; 5. interaction module; 6. monitoring module.

### Detailed Description

The foregoing summary and the following detailed description of certain embodiments will be better understood when read with reference to the accompanying drawings. In terms of simplified diagrams illustrating functional blocks of some embodiments, the functional blocks do not necessarily indicate the division between hardware circuits. Thus, for example, one or more of the functional blocks (such as a processor or a memory) may be implemented in a single piece of hardware (such as a general-purpose signal processor or a piece of random access memory, a hard disk, etc.) or multiple pieces of hardware. Similarly, a program may be an independent program, may be combined into a routine in the operating system, may be a function in an installed software package, or the like. It should be understood that some embodiments are not limited to the arrangements and tools shown in the drawings.

As used in the present disclosure, elements or steps recited in the singular or started with the word "a" or "an" should be understood as not excluding the plural of the elements or steps, unless such exclusion is clearly stated. In addition, references to "one embodiment" are not intended to be interpreted as excluding the existence of additional embodiments that also incorporate the recited features. Unless the contrary is clearly stated, embodiments that "include," "comprise," or "have" an element or elements having a particular attribute may include additional such element(s) not having that attribute.

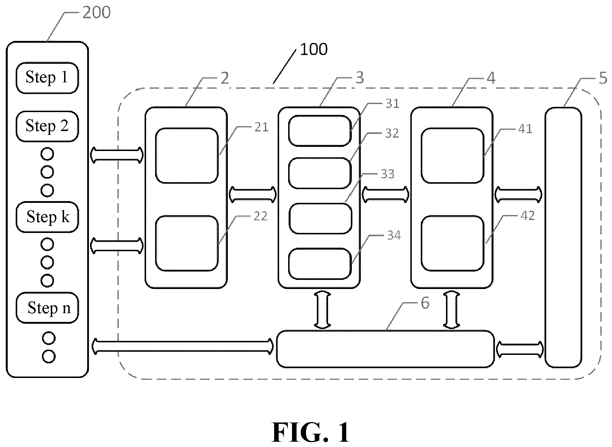

FIG. 1 shows qubit detection system 100 according to some embodiments. Qubit system 100 shown on the right side of FIG. 1 includes test module 2, test control module 3, prediction module 4, interaction module 5, and monitoring module 6. Qubit preparation process 200 is shown on the left side of FIG. 1. Process 200 may include a plurality of steps, as shown in the drawing: step 1, step 2, ..., step k, ..., and step n.

In some embodiments, test module 2 includes imaging device 21 and detection device 22. Imaging device 21 may be a scanning electron microscope (SEM), and detection device 22 may be any known device capable of detecting qubits in the prior art. Scanning electron microscope 21 may be configured to image qubits, and the imaging may occur at any step in the qubit preparation process.

In some embodiments, imaging device 22 may also be a scanning tunneling microscope (STM), and detection device 22 may be any known electronic device capable of detecting qubits in the prior art. Scanning tunneling microscope 22 may be configured to image qubits, and the imaging may occur at any step in the qubit preparation process.

In some embodiments, imaging device 22 may also include other imaging devices known to those skilled in the art, such as an infrared imaging device and an optical imaging device in a visible light frequency range. These devices can be used for imaging qubits at any one or more steps in the preparation process.

In some embodiments, test control module 3 includes: imaging data generation module 31, imaging data reading module 32, qubit test generation module 33, and qubit test data reading module 34. Test control module 3 is in a communication connection with test module 2.

Imaging data generation module 31 is configured to generate a test request (such as specific imaging parameters and imaging time) required for imaging, and send the generated imaging test request to imaging device 21, so that imaging device 21 performs a required test according to the test request, and obtains a formed image and parameters collected during imaging. Then, the formed image and the parameters collected during imaging are sent to imaging data reading module 32. In some embodiments, when imaging device 21 is a scanning electron microscope (SEM), data generating module 31 generates an SEM test request, sends the test request to the SEM, controls the SEM to perform the required test, and generates an SEM image and parameters during SEM image collection. The acquired image includes at least one image, usually a plurality of images. The plurality of images can be acquired continuously or at intervals. The acquired SEM images and the parameters during SEM image collection are sent to imaging data reading module 32.

In some embodiments, when imaging device 21 is a scanning tunneling microscope (STM), data generation module 31 generates an STM test request, sends the test request to the STM, controls the STM to perform the required test, and generates an STM image and parameters during STM image collection. The acquired image includes at least one image, usually a plurality of images. The plurality of images can be acquired continuously or at intervals. The acquired STM images and parameters during STM image collection are sent to imaging data reading module 32.

In some embodiments, imaging device 21 is an optical imaging device in a visible light frequency range, such as a photosensitive coupling device (CCD). The optical imaging device is used to image qubits at one or more steps in the preparation process, and the acquired image includes at least one image, usually a plurality of images. The plurality of images can be acquired continuously or at intervals. The acquired images are sent to imaging data reading module 32.

In some embodiments, imaging device 21 is an infrared imaging device. The infrared imaging device is used to image qubits at one or more steps in the preparation process. The acquired image includes at least one image, usually a plurality of images. The plurality of images can be acquired continuously or at intervals. The acquired images are sent to imaging data reading module 32.

In some embodiments, imaging device 21 is an ultraviolet imaging device. The ultraviolet imaging device is used to image qubits at one or more steps in the preparation process. The acquired image includes at least one image, usually a plurality of images. The plurality of images can be acquired continuously or at intervals. The acquired images are sent to imaging data reading module 32.

Qubit test generation module 33 is configured to generate a test request required for detecting qubits, and send the generated test request to detection device 22, so that detection device 22 performs the required test according to the test request and acquires a test result. The test results may include: the working frequency of the qubits, the coherence time of the qubits, the coupling strength of the qubits, etc. The obtained test results are sent to qubit test data reading module 34.

In some embodiments, prediction module 4 includes qubit defect determining and property prediction module 41 and machine learning model 42. Prediction module 4 is in a communication connection with test control module 3.

In some embodiments, machine learning model 42 may be a trained convolutional neural network (CNN). The training data of the convolutional neural network may include: a qubit design drawing (a gds file) input by a user, an image (including the image itself, parameters during image collection, test requests for imaging, etc.) acquired in a qubit preparation process and transmitted by imaging data reading module 33, and test results, test parameters, and the like obtained by testing the qubits with detection device 22 and transmitted by qubit test data reading module 34. These test results may include: the working frequency of the qubits, the coherence time of the qubits, the coupling strength of the qubits, etc.

In some embodiments, the imaging device is an SEM. The training data of the convolutional neural network may include: a qubit design drawing (a gds file) input by a user, an SEM image (including the SEM image itself, parameters during SEM image collection, test requests for SEM imaging, etc.) acquired in a qubit preparation process and transmitted by imaging data reading module 33, and test results, test parameters, and the like obtained by testing the qubits with detection device 22 and transmitted by qubit test data reading module 34. These test results may include: the working frequency of the qubits, the coherence time of the qubits, the coupling strength of the qubits, etc.

In some embodiments, the imaging device is an STM. The training data of the convolutional neural network may include: a qubit design drawing (for example, but not limited to, a gds file) input by a user, an STM image (including the STM image itself, parameters during STM image collection, test requests for STM imaging, etc.) acquired in a qubit preparation process and transmitted by imaging data reading module 33, and test results, test parameters, and the like obtained by testing the qubits with detection device 22 and transmitted by qubit test data reading module 34. These test results may include: the working frequency of the qubits, the coherence time of the qubits, the coupling strength of the qubits, etc.

In some embodiments, the imaging device is an optical device. In particular, the optical device includes an imaging device in a visible light frequency range, or an infrared imaging device. Similar to the above SEM or STM imaging device, images formed by the imaging device in the visible light frequency range as well as the infrared imaging device, parameters during imaging, and test requests for imaging can all be used as a training input of the convolutional neural network.

In some embodiments, after the training of the convolutional neural network is completed, the property of the qubits can be determined and predicted based on the actual input, and the result of the determination and prediction is transmitted to qubit defect determining and property prediction module 41. The actual input includes the results of the tests performed in the qubit preparation process. Specifically, SEM imaging of the qubits is performed in the qubit preparation process by using, for example, an SEM device, and the imaging may occur in any step or a plurality of steps in the preparation process. The imaging data is transmitted to the trained convolutional neural network, and quantitative information of the qubits is provided by the convolutional neural network, including the working frequency of the qubits, the coherence time of the qubits, the coupling strength of qubits, etc. The quantitative information is further transmitted to the qubit defect determining and property prediction module for output. The qubit defect determining and property prediction module can directly output the quantitative information, or can provide, based on the quantitative information, qualitative information such as classification of qubit properties.

In some embodiments, the required training can be performed on the convolutional neural network according to different types of qubits and different qubit designs. In addition, prepared qubit samples may be regularly tested to obtain test values of the properties of the qubits (for example, but not limited to, the working frequency of the qubits, the coherence time of the qubits, and the coupling strength of the qubits). By comparing real qubit property measurement values with predicted values of the convolutional neural network, it is determined whether the convolutional neural network needs to be retrained and adjusted.

In other embodiments, machine learning model 42 may be a deep neural network (DNN) or a recurrent neural network (RNN). The training process and output process of the DNN and the RNN are similar to those of the above convolutional neural network (CNN). Those skilled in the art can also use any other algorithms known in the art as machine learning model 42.

In some embodiments, qubit detection system 100 further includes interaction module 5 and monitoring module 6. Interaction module 5 is in a communication connection with prediction module 4 and monitoring module 6. Monitoring module 6 is in a communication connection with test control module 3, prediction module 4, interaction module 5, and qubit preparation process 100. Interaction module 5 is configured to support user input and output functions, transmit input information of the user and various parameters to prediction module 4 and monitoring module 6 as needed, and display a prediction result output generated by prediction module 4 to the user. Monitoring module 6 monitors test control module 3, prediction module 4, interaction module 5, and qubit preparation process 100.

In some embodiments, after prediction module 4 obtains predicted qualitative and quantitative information, the predicted qualitative and quantitative information is further transmitted to interactive module 5 and monitoring module 6, and the user obtains the predicted qualitative and quantitative information via monitoring module 6. Based on the qualitative and quantitative information, the user can adaptively adjust various parameters in real time in the qubit preparation process. These adaptive adjustments include, but are not limited to, adjustment on a single preparation step (such as step n), and overall optimization can also be performed on the entire qubit preparation process after the qubit preparation is completed. Thus, the preparation yield (Yield) of qubits can be improved.

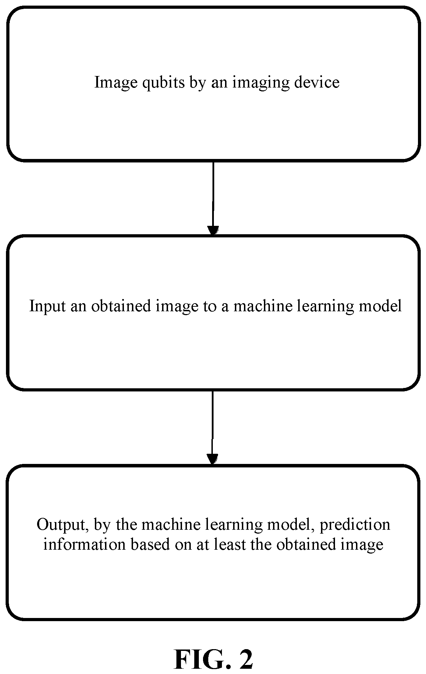

In some embodiments, a qubit detection method is provided. As shown in FIG. 2, the detection method includes: imaging qubits by an imaging device, and inputting an obtained image to a trained machine learning model. The training process may be as described above. The machine learning model outputs prediction information based on at least the obtained image.

In some embodiments, the imaging device is an SEM, and the machine learning model is a convolutional neural network (CNN).

In some embodiments, the imaging device is an STM, and the machine learning model is a convolutional neural network (CNN).

In some embodiments, the imaging device is an imaging device in a visible light frequency range, and the machine learning model is a convolutional neural network (CNN).

In some embodiments, the imaging device is an infrared imaging device, and the machine learning model is a convolutional neural network (CNN).

In some embodiments, the imaging device is an ultraviolet imaging device, and the machine learning model is a convolutional neural network (CNN).

In some embodiments, the machine learning model is a deep neural network (DNN).

In some embodiments, the machine learning model is a recurrent neural network (RNN).

In some embodiments, one or more processes are chosen in a qubit preparation device process for imaging by an SEM. An obtained image is input to a trained convolutional neural network model, and the convolutional neural network model outputs prediction information based on the obtained image. The prediction information includes quantitative information, such as the working frequency of the qubits, the coherence time of the qubits, the coupling strength of the qubits, etc., and may also include qualitative information, such as the property classification of the qubits. Based on the prediction information, the user can quickly know the properties of the qubits in a certain step or in certain steps, and adjust qubit preparation process 100 accordingly based on these properties.

In some embodiments, one or more processes are chosen in a qubit preparation device process for imaging by an STM. An obtained image is input to a trained convolutional neural network model, and the convolutional neural network model outputs prediction information based on the obtained image. The prediction information includes quantitative information, such as the working frequency of the qubits, the coherence time of the qubits, the coupling strength of the qubits, etc., and may also include qualitative information, such as the property classification of the qubits. Based on the prediction information, the user can quickly know the properties of the qubits in a certain step or in certain steps, and adjust qubit preparation process 100 accordingly based on these properties.

Various embodiments integrate a qubit detection system and detection method. The advantages of the present disclosure include but are not limited to:
The system and method of the present disclosure can be effectively integrated with the existing and possible future mass production process lines of qubits. The properties of qubits can be quickly estimated in a production process of qubits or after the production and preparation of qubits is completed. According to this quick estimation, the qubit detection may be performed more efficiently.

Based on the quick estimation of the system and method of the present disclosure, necessary parameter adjustment and optimization of the qubit production process can be performed efficiently, thereby improving the overall yield (Yield) of the qubit production line. Moreover, the parameter adjustment and optimization of the present disclosure is not limited to being performed after the qubit preparation is completed, but can be adjusted in real time in the qubit preparation process, which can be more beneficial to improve the yield in the qubit production process.

In the present disclosure, an imaging device is used to detect qubits, and a machine learning model analyzes an image obtained from quanta, thereby obtaining qualitative and quantitative information predictions of the qubits. Compared with the prior art, the cost of the technical solution of the present disclosure is extremely low, and it has great advantages in industrial applications after implementation of mass production of qubits.

It should be understood that the above description is intended to be exemplary rather than restrictive. For example, the above-described embodiments (and/or various aspects thereof) can be used in combination with each other. In addition, many modifications can be made without departing from the scope of some embodiments to adapt specific situations or content to the teaching of some embodiments. Although the sizes and types of materials described herein are intended to limit parameters of some embodiments, the embodiments are by no means restrictive, but are exemplary embodiments. After the above description is reviewed, many other embodiments will be apparent to those skilled in the art. Therefore, the scope of some embodiments should be determined with reference to the appended claims and the full scope of equivalents covered by such claims. In the appended claims, the terms "comprise" and "wherein" are used as the plain language equivalents of the corresponding terms "include" and "in which." In addition, in the appended claims, the terms "first," "second," "third," etc. are used only as marks, and they are not intended to impose numerical requirements on their objects. In addition, the limitations of the appended claims are not written in a means-plus-function format unless and until such claim limitations clearly use the phrase "means for..." followed by a function statement without additional structure.

It should be further noted that the terms "include," "comprise," or any other variations thereof are intended to cover non-exclusive inclusion, so that a process, method, commodity, or device including a series of elements not only includes the elements, but also includes other elements not explicitly listed, or further includes elements inherent to the process, method, commodity, or device. In the absence of more limitations, an element defined by "including a/an..." does not exclude that the process, method, commodity, or device including the element further has other identical elements.

Those skilled in the art should understand that some embodiments of the present disclosure can be provided as a method, an apparatus, or a computer program product. Therefore, the present disclosure may be in the form of a complete hardware embodiment, a complete software embodiment, or an embodiment combining software and hardware. Moreover, the present disclosure can be in the form of a computer program product implemented on one or more computer-usable storage media (including, but not limited to, a magnetic disk memory, a CD-ROM, an optical memory, and the like) including computer-usable program code.

The computer-readable medium, including permanent and non-permanent, removable and non-removable media, can implement information storage by means of any method or technology. The information may be computer-readable instructions, data structures, program modules, or other data. Examples of computer storage media include, but are not limited to, a phase change memory (PRAM), a static random access memory (SRAM), a dynamic random access memory (DRAM), other types of random access memories (RAM), read-only memories (ROM), electrically erasable programmable read-only memories (EEPROM), flash memories or other memory technologies, read-only compact disc read-only memories (CD-ROM), digital versatile disks (DVD) or other optical storage, magnetic tape cassettes, magnetic tape magnetic disk storage or other magnetic storage devices, or any other non-transmission media, and the computer storage media can be used to store information that can be accessed by computing devices. As defined herein, the computer-readable medium does not include transitory computer-readable media (transitory media), such as a modulated data signal and a carrier.

Examples are used in this written description to disclose some embodiments, including the best mode, and also enable any person skilled in the art to practice some embodiments, including manufacturing and using any devices or systems, and implementing any combined methods. The protection scope of some embodiments is defined by the claims and may include other examples that occur to those skilled in the art. If such other examples have structural elements that are not different from the literal language of the claims, or if they include equivalent structural elements that are not substantially different from the literal language of the claims, they are intended to be within the scope of the claims.

## Claims

1. A qubit detection method, comprising:
imaging qubits by an imaging device;
inputting an obtained image to a machine learning model; and
outputting, by the machine learning model, prediction information based on at least the obtained image.

2. The method according to claim 1, further comprising:
detecting the qubits by a detection device to obtain detection data;
inputting the detection data to the machine learning model; and
outputting, by the machine learning model, prediction information based on test data and the obtained image.

3. The method according to claim 2, further comprising:
acquiring design information of the qubits;
inputting the design information of the qubits to the machine learning model; and
outputting, by the machine learning model, prediction information based on the design information, the test data, and the obtained image.

4. The method according to any one of claims 1 to 3, wherein the imaging device comprises a scanning electron microscope (SEM), a scanning tunneling microscope (STM), an infrared imaging device, an ultraviolet imaging device, and an imaging device in a visible light range.

5. The method according to claim 4, wherein the imaging device is configured to perform imaging in a qubit preparation process, and the preparation process comprises a plurality of steps.

6. The method according to claim 4, wherein the imaging device is configured to perform imaging after the preparation of qubits is completed.

7. The method according to claim 4, wherein the prediction information comprises quantitative information and qualitative information.

8. The method according to claim 7, wherein the quantitative information comprises at least one of the following: working frequency, coherence time, and coupling strength.

9. The method according to claim 7, wherein the qualitative information comprises: classification of qubits.

10. The method according to any one of claims 1 to 3, wherein the machine learning model comprises a convolutional neural network (CNN), a deep neural network (DNN), and a recurrent neural network (RNN).

11. The method according to claim 1, further comprising:
detecting qubits by a detection device;
inputting test data to the machine learning model; and
outputting, by the machine learning model, prediction information based on the test data and the obtained image.

12. A qubit detection system, comprising:
a test module, wherein the test module comprises an imaging device configured to image qubits; and
a prediction module, wherein the prediction module is in a communication connection with the test module, and comprises a machine learning model configured to output prediction information based on at least an obtained image.

13. The qubit detection system according to claim 12, wherein the test module further comprises a detection device configured to detect qubits so as to obtain detection data.

14. The qubit detection system according to claim 12, wherein the imaging device comprises a scanning electron microscope (SEM), a scanning tunneling microscope (STM), an infrared imaging device, an ultraviolet imaging device, and an imaging device in a visible light range.

15. The qubit detection system according to claim 12, wherein the machine learning model comprises a convolutional neural network (CNN), a deep neural network (DNN), and a recurrent neural network (RNN).

16. The qubit detection system according to claim 12, further comprising: an interaction module and a monitoring module, wherein the monitoring module is in a communication connection with the prediction module, and the interaction module is in a communication connection with the prediction module and the monitoring module.

17. The qubit detection system according to claim 12, further comprising: a test control module, wherein the test control module is located between and in a communication connection with the test module and the prediction module, and the test control module comprises: an imaging data generation module, an imaging data reading module, a qubit test generation module, and a qubit test data reading module.

18. The qubit detection system according to claim 12, wherein the prediction module comprises a qubit defect determining and property prediction module.

19. A qubit detection device, comprising: a processor and a non-transitory storage medium, wherein the non-transitory storage medium stores an instruction set, and when executed by a processor, the instruction set implements:
a device configured to enable an imaging device to image qubits;
a device configured to input an obtained image to a machine learning model; and
a device configured to enable the machine learning model to output prediction information based on at least the obtained image.
